# EUROPÄISCHE PATENTANMELDUNG

(11) **EP 3 178 763 A1**
(43) Veröffentlichungstag der Anmeldung: **14.06.2017**
(21) Anmeldenummer: 16186461.6
(22) Anmeldetag: 31.08.2016
(51) Int. Cl.: B65G 43/02

(54) **FÖRDERGURT ZUR VERWENDUNG IN EINER FÖRDERGURTANLAGE MIT EINEM LEITERSCHLEIFENBASIERTEN SCHLITZERKENNUNGSSYSTEM**

(30) Priorität: 08.12.2015 DE 102015224561
(71) Anmelder: ContiTech Transportbandsysteme GmbH, 30165 Hannover (DE)
(72) Erfinder: Wiegmann, Florian, 30159 Hannover (DE); Dallwitz, Gerhard, 61194 Niddatal (DE); Wennekamp, Tobias, 34414 Warburg (DE)
(74) Vertreter: Finger, Karsten

(57) **Zusammenfassung**

Die vorliegende Erfindung betrifft einen Fördergurt (1) zur Verwendung in einer Fördergurtanlage (3) mit einem leiterschleifenbasierten Schlitzerkennungssystem (2) mit einem Fördergurtkörper (10), welcher sich im Wesentlichen in einer Längsrichtung (X) erstreckt und in der Längsrichtung (X) endlos geschlossen ist oder ausgebildet ist, in der Längsrichtung (X) endlos geschlossen zu werden, wobei sich der Fördergurtkörper (10) ferner in einer Querrichtung (Y) senkrecht zur Längsrichtung (X) erstreckt und die Erstreckung des Fördergurtkörpers (10) in Querrichtung (Y) geringer ist als in Längsrichtung (X), und wobei sich der Fördergurtkörper (10) ferner in einer senkrechten Richtung (Z) senkrecht zur Längsrichtung (X) und senkrecht zur Querrichtung (Y) erstreckt und die Erstreckung des Fördergurtkörpers (10) in der senkrechten Richtung (Z) geringer ist als in Querrichtung (Y), und wenigstens einer ersten Leiterschleife (11), welche zumindest abschnittsweise von dem Fördergurtkörper (10) umgeben wird. Der Fördergurt (1) ist dadurch gekennzeichnet, dass sich die erste Leiterschleife (11) zumindest abschnittsweise in der senkrechten Richtung (Z) erstreckt.

## Beschreibung

Die vorliegende Erfindung betrifft einen Fördergurt zur Verwendung in einer Fördergurtanlage mit einem leiterschleifenbasierten Schlitzerkennungssystem gemäß dem Oberbegriff des Anspruchs 1, ein leiterschleifenbasiertes Schlitzerkennungssystem gemäß des Anspruchs 14 sowie eine Fördergurtanlage gemäß des Anspruchs 15.

Beim Einsatz von Fördergurten besteht insbesondere beim Einsatz in Minen und ähnlichen Anlagen die Gefahr, dass der Fördergurt beschädigt wird. Eine Gefahr tritt insbesondere durch in Längsrichtung, d.h. in Laufrichtung, des Fördergurts verlaufende Schlitze auf, durch die Fördergut nach unten durch den Fördergurt hindurchtreten kann. Dies kann zu einem Verlust von Fördergurt, zu Beschädigungen der Fördergurtanlage sowie zu Verschmutzungen der Umwelt führen. Auch kann hierdurch aus einem anfänglich kurzen Schlitz eine Beschädigung bzw. Zerstörung des Fördergurtes über eine große Länge werden, weil z.B. ein anfänglich kleiner Schlitz durch das hindurchtretende Fördergut aufgeweitet werden kann oder falls der schneidende Gegenstand in der Förderanlage verbleibt. In allen Fällen kann es zu einem vollkommenen Stillstand der Fördergurtanlage mit entsprechenden Produktionsausfällen und Kosten kommen.

Um diese Risiken zu vermeiden bzw. zu minimieren ist es bekannt, bei Fördergurtanlagen Systeme zur Schlitzerkennung einzusetzen. Übliche Schlitzerkennungssysteme weisen eine Mehrzahl geschlossener Leiterschleifen auf, welche in üblicherweise konstanten Abständen von z.B. 25 m bis 100 m in das Material des Fördergurtes eingebettet sind. Die Leiterschleifen sind üblicherweise elektrisch leitfähig, insbesondere metallisch. Innerhalb der Fördergurtanlage wird an wenigstens einer Stelle entlang des laufenden Fördergurtes ein elektromagnetisches Signal zum Fördergurt hin ausgesendet, welches von der jeweiligen Leiterschleife empfangen werden kann. Je nach Schlitzerkennungssystem kann die Leiterschleife selbst z.B. durch elektromagnetische Resonanz ein Signal zurücksenden oder über die Leiterschleife kann ein elektronisches Bauteil wie z.B. ein Transponder wie z.B. ein RFID-Chip angesprochen werden, um ein Signal zurückzusenden. In allen Fällen erfolgt eine Reaktion der Leiterschleife lediglich im vollständig bzw. weitestgehend intakten Zustand der Leiterschleife.

Wird die Leiterschleife zu stark beschädigt oder sogar unterbrochen bzw. zerstört, bleibt die Reaktion aus. Dies kann durch das Schlitzerkennungssystem erkannt werden, so dass auf eine möglicherweise an dieser Stelle des Fördergurtes vorhandene Beschädigung wie z.B. ein Längsschlitz geschlossen werden kann. In diesem Fall kann der Fördergurt frühzeitig angehalten und die Stelle inspiziert und ggfs. repariert werden, bevor sich ein Schlitz bis zu einer kritischen Beschädigung ausweiten kann. Dies kann die zuvor beschriebenen Nachteile vermeiden und insbesondere schadensbedingte Stillstandzeiten der Fördergurtanlage reduzieren helfen.

Beispielsweise ist aus der DE 12 33 324 B eine berührungslos induktiv wirkende Überwachungsanordnung für Fördergurte bekannt, bei der an dem Fördergurt Induktionsschleifen quer zur Laufrichtung angebracht sind. Die Induktionsschleifen liegen in der Fläche des Fördergurtes, d.h. in einer Ebene in Längsrichtung und Querrichtung des Fördergurtes. Außerhalb des Fördergurtes sind ortsfeste Magneten und Empfängerspulen angeordnet, wobei die Empfängerspulen ein elektromagnetisches Feld aufweisen. Fährt nun der Fördergurt mit einer Induktionsschleife über eine Empfängerspule hinweg, so wird in der Induktionsschleife ein Stromstoß induziert, der wiederum ein Signal in der ortsfesten Empfängerspule induziert. Ist nun durch einen Riss der Stromfluss in der Induktionsschleife des Fördergurtes unterbrochen, so wird in dem Empfänger kein Signal festgestellt, so dass die Beschädigung der Leiterschleife erkannt werden kann.

Derartige Leiterschleifen sind in der horizontalen X-Y-Ebene des Fördergurtes ausgeführt, d.h. in der Ebene in Längsrichtung und Querrichtung des Fördergurtes. Daher kann es beim Betrieb des Fördergurtes zu Dehnungsbeanspruchungen in der longitudinalen und transversalen Richtung des Fördergurtes und der darin eingebetteten Leiterschleife kommen.

Des Weiteren ist es üblicherweise notwendig, die beiden Enden der Leiterschleife zu verbinden. Diese Verbindungsstellen befinden sich dann ebenfalls in der horizontalen X-Y-Ebene. Diese Verbindungen der Leiterschleifenenden können durch Aufschlagsbelastung und die zuvor beschriebenen Dehnungsbeanspruchungen beschädigt werden, da es sich üblicherweise um starre Verbindungen der Leiterschleifenenden handelt.

Nachteilig ist somit, dass es durch Dehnungs- und Aufschlagsbeanspruchungen der Leiterschleifen bzw. deren Verbindungen der Leiterschleifenenden im Laufe des Betriebes zu einem Versagen der Signalübertragung kommen kann, ohne das tatsächlich eine Beschädigung des Fördergurtes aufgetreten ist. Das Schlitzerkennungssystem würde in diesem Fall reagieren, auch wenn gar kein Schlitz vorliegt.

Nachteilig ist ferner, dass eine defekte Leiterschleife aufwendig ersetzt werden muss. Die Leiterschleifentypen können unterschiedliche Ausdehnungen in Längsrichtung, d.h. in X-Richtung, aufweisen, welche jedoch üblicherweise bei minimal ca. 30 cm liegen. Um eine derartige beschädigte Leiterschleife zu ersetzen, muss üblicherweise die komplette Deckplatte des Fördergurtes mit der defekten Leiterschleife ausgetauscht werden. Bei elastomeren Fördergurten erfolgt dies durch Heißvulkanisation. Geht man hierbei von einer minimalen Erstreckung der Leiterschleife in Längsrichtung von ca. 30 cm aus, so ist die Deckplatte auf einer Länge von ca. 60 cm in Längsrichtung sowie über die üblicherweise gesamte Breite des Fördergurtes zu ersetzen. Dieses kann sehr aufwendig und damit zeit- und kostenintensiv sein.

Bei der Herstellung derartiger mit Leiterschleifen versehener Fördergurte werden üblicherweise die Leiterschleifen nachträglich in den Fördergurt eingelegt. Hierzu werden nach der Kaltpresse entsprechende Stück wieder aus der Deckplatte des Fördergurtes heraus geschnitten und jeweils durch ein Leiterschleifenpaket ersetzt. Hierdurch können Abfall und zusätzliche Produktionskosten anfallen.

Nachteilig ist somit ferner, dass das Ersetzen einer defekten Leiterschleife ebenso wie das Einbringen einer Leiterschleife in den Fördergurt bei der Herstellung vergleichsweise aufwendig sein kann, was zu entsprechenden Kosten führen kann.

Eine Aufgabe der vorliegenden Erfindung ist es, einen Fördergurt mit Leiterschleifen der eingangs beschriebenen Art bereit zu stellen, dessen Leiterschleifen eine höhere Lebensdauer als bisher bekannt aufweisen können. Insbesondere soll die Aufschlagsbelastung und bzw. oder die Dehnungsbeanspruchung der Leiterschleifen reduziert werden. Zusätzlich oder alternativ soll das Einbringen der Leiterschleifen in den Fördergurt und bzw. oder der Austausch von Leiterschleifen vereinfacht werden.

Die Aufgabe wird erfindungsgemäß durch einen Fördergurt mit den Merkmalen gemäß Anspruch 1, durch ein leiterschleifenbasiertes Schlitzerkennungssystem gemäß Anspruch 14 sowie durch eine Fördergurtanlage gemäß Anspruch 15 gelöst. Vorteilhafte Weiterbildungen sind in den Unteransprüchen beschrieben.

Somit betrifft die vorliegende Erfindung einen Fördergurt zur Verwendung in einer Fördergurtanlage mit einem leiterschleifenbasierten Schlitzerkennungssystem gemäß dem Oberbegriff des Anspruchs 1. Hierbei handelt es sich um einen bekannten Fördergurt, dessen Fördergurtkörper sich endlos geschlossen in der Längsrichtung erstreckt, welche im Wesentlichen auch der Bewegungsrichtung entspricht. In der Breite und Dicke bzw. Höhe ist der Fördergurt jeweils deutlich geringer dimensioniert. Auf diese Weise erstreckt sich der Fördergurtkörper im Wesentlichen in der horizontalen Ebene, welche sich in der Längsrichtung und in der Querrichtung erstreckt und auch als X-Y-Ebene bezeichnet werden kann. In der hierzu senkrechten Richtung, welche die Höhe oder auch Dicke des Fördergurtkörpers darstellt, tritt die geringste Erstreckung auf.

Innerhalb des Fördergurtkörpers ist wenigstens eine erste Leiterschleife angeordnet, welche zumindest abschnittsweise von dem Fördergurtkörper umgeben wird. Die Leiterschleife ist endlos geschlossen ausgebildet. Die Leiterschleife ist elektromagnetisch leitfähig ausgebildet, damit elektromagnetische Wellen von der Leiterschleife empfangen und auch ausgesendet werden können. Auf diese Weise kann die Leiterschleife zur Wechselwirkdung mit einem entsprechenden leiterschleifenbasierten Schlitzerkennungssystem einer Fördergurtanlage verwendet werden.

Derartige Leiterschleifen verlaufen üblicherweise in der horizontalen X-Y-Ebene des Fördergurtkörpers. Hierdurch sind die bekannten Leiterschleifen zum einen Dehnungsbeanspruchungen des Fördergurtkörpers sowohl in Querrichtung als auch besonders in Längsrichtung ausgesetzt. Zum anderen bieten die Leiterschleifen durch ihre horizontale Erstreckung eine große Angriffsfläche für Aufschlagsbelastungen, welche durch die Aufgabe des Fördergutes auf die Tragseite des Fördergurtkörpers entstehen können. Ferner nehmen diese Leiterschleifen eine gewisse Fläche ein, welche bei der Herstellung sowie beim Austausch zu bearbeiten ist.

Der vorliegenden Erfindung liegt daher die Erkenntnis zugrunde, die erste Leiterschleife derart auszubilden bzw. anzuordnen, dass sich die erste Leiterschleife zumindest abschnittsweise in der senkrechten Richtung erstreckt. Hierdurch kann eine Erstreckung der ersten Leiterschleife in der Längsrichtung, d.h. X-Richtung, zumindest abschnittsweise vermieden werden, so dass zumindest in diesem Abschnitt der ersten Leiterschleife keine Dehnungsbeanspruchen in Längsrichtung auftreten können. Auch kann hierdurch die horizontal ausgerichtete Angriffsfläche für Aufschlagsbelastungen reduziert werden. Dies kann sich vorteilhaft auf die Lebensdauer der ersten Leiterschleife auswirken.

Vorteilhaft ist hierbei auch, dass sich die Erstreckung der ersten Leiterschleife in der Längsrichtung reduzieren lässt. Auf diese Weise kann bei der Herstellung einer Leiterschleife ein in Längsrichtung schmalerer Bereich bearbeitet werden. Hierdurch lassen sich die Herstellungskosten in der Produktion verringern. Auch kann eine schmalere Leiterschleife mit einfacheren Mittel und Werkzeugen bei der Herstellung in den Fördergurtkörper eingearbeitet werden. Beim Austausch einer beschädigten Leiterschleife kann ebenfalls ein schmalerer Bereich mit ggfs. einfacheren Mittel insbesondere schneller ausgetauscht werden. Dies kann sich insbesondere beim Austausch bei einem Fördergurt in einer Fördergurtanlage vorteilhaft auswirken, weil schmalere Bereiche ggfs. auch mittels einer Kaltreperatur bearbeitet werden können. Auf diese Weise kann eine Heißvulkanisation im Feld, d.h. in einer Fördergurtanlage, vermieden werden.

Vorteilhaft ist ferner, dass die Belastung, welche die erste Leiterschleife durch den Umlauf des Fördergurtes an z.B. den Umlenk- und Antriebstrommel erfahren kann, durch die schmalere Erstreckung der ersten Leiterschleife in der Längsrichtung reduziert werden kann. Dies kann die Langlebigkeit der ersten Leiterschleife erhöhen. Ferner können hierdurch kleinere Biegeradien des Fördergurtes ermöglicht werden.

Grundsätzlich kann jedes elektrisch leitfähige Material als Material der ersten Leiterschleife verwendet werden. Die erste Leiterschleife kann eine einzige Litze aufweisen oder aus einer Mehrzahl einzelner Litzen bestehen, welche zu der ersten Leiterschleife zusammengefügt sind.

Gemäß einem Aspekt der vorliegenden Erfindung ist die erste Leiterschleife im Wesentlichen rechteckig ausgebildet und erstreckt sich in der Querrichtung und in der senkrechten Richtung. Auf diese Weise kann die Erstreckung der ersten Leiterschleife im Wesentlichen vollständig in die Ebene der Querrichtung und der senkrechten Richtung, d.h. in die Y-Z-Ebene, erfolgen, so dass eine Erstreckung der ersten Leiterschleife in der Längsrichtung, d.h. in der X-Richtung, nahezu vollständig vermieden werden kann. Hierdurch kann eine Dehnungsbeanspruchung der ersten Leiterschleife in longitudinaler Richtung nahezu vollständig vermieden werden. Auch kann die Angriffsfläche für Aufschlagsbelastungen nahezu vollständig eliminiert werden. Entsprechenden können die zuvor beschriebenen Effekte, die die Dehnungsbeanspruchung und Aufschlagsbelastung mit sich bringen können, entsprechend reduziert bzw. sogar vollständig vermieden werden.

Gemäß einem weiteren Aspekt der vorliegenden Erfindung ist die erste Leiterschleife mittels einer Verbindungsstelle ihrer beiden Enden endlos geschlossen, wobei sich die Verbindungsstelle der ersten Leiterschleife im Wesentlichen in der Querrichtung und bzw. oder in der senkrechten Richtung erstreckt. Hierdurch kann die Verbindung der Enden der ersten Leiterschleife in die Y-Z-Ebene gelegt werden. Auf diese Weise kann eine Dehnungsbelastung der Verbindungsstelle bzw. können Aufschlagsbelastungen auf die Verbindungsstelle reduziert oder sogar vollständig vermieden werden.

Gemäß einem weiteren Aspekt der vorliegenden Erfindung ist die Verbindungsstelle auf der Seite der ersten Leiterschleife angeordnet, welche der Tragseite des Fördergurtes abgewandt ist. Mit anderen Worten ist die Verbindungsstelle auf dem in Querrichtung verlaufenden Schenkel der ersten Leiterschleife angeordnet, welcher der Tragseite des Fördergurtes abgewandt ist. Hierdurch kann die Verbindungsstelle der ersten Leiterschleife möglichst weit von der Oberfläche des Fördergurtes, welche das Fördergut aufnehmen kann, beabstandet werden Auf diese Weise kann die Verbindungsstelle durch das Material des Fördergurtkörpers möglichst gut vor den Aufschlagbelastungen des Fördergutes geschützt werden, was die Langlebigkeit der Verbindungsstelle erhöhen kann.

Gemäß einem weiteren Aspekt der vorliegenden Erfindung weist der Fördergurt wenigstens eine zweite Leiterschleife auf, welche zumindest abschnittsweise von dem Fördergurtkörper umgeben wird, wobei die erste Leiterschleife und die zweite Leiterschleife in der Längsrichtung um einen Abstand zueinander beabstandet angeordnet sind, wobei der Abstand derart gering gewählt ist, dass die beiden Leiterschleifen mit einer Sender-/Empfangseinheit eines leiterschleifenbasierten Schlitzerkennungssystems der Fördergurtanlage als eine Leiterschleife zusammenwirken können.

Hierunter ist zu verstehen, dass die beiden Leiterschleifen nicht so weit wie z.B. ca. 25 m bis ca. 100 m in der Längsrichtung X zueinander beabstandet sind, wie es üblicherweise mehrere Leiterschleifen bekannter Fördergurt zur Verwendung in einer Fördergurtanlage mit einem leiterschleifenbasierten Schlitzerkennungssystem sind. Vielmehr sind die beiden Leiterschleifen in der Längsrichtung derart nahe beieinander angeordnet, dass sie eine bekannte horizontal ausgerichtete Leiterschleife ersetzen können. Mit anderen Worten sind die beiden Leiterschleifen derart nahe beieinander angeordnet, dass sie von einem leiterschleifenbasierten Schlitzerkennungssystem als eine bekannte horizontal ausgerichtete Leiterschleife angesehen werden können.

Somit kann eine Nutzung der erfindungsgemäßen Vorteile durch die vertikale Ausrichtung der beiden Leiterschleifen erfolgen und gleichzeitig Veränderungen an dem leiterschleifenbasierten Schlitzerkennungssystem vermieden werden. Dies kann die Akzeptanz des Herstellers des leiterschleifenbasierten Schlitzerkennungssystems sowie des Betreibers der Fördergurtanlage für einen erfindungsgemäßen Fördergurt erhöhen.

Ferner kann mit mehreren und insbesondere mit mehreren dünneren Leiterschleifen eine vergleichbare Signalwirkung wie mit einer dickeren herkömmlichen Leiterschleife erzeugen werden. Jedoch kann die Ausfallwahrscheinlichkeit der Leiterschleifenanordnung als Ganzes deutlich reduziert werden, weil bei Ausfall einer einzelnen Leiterschleife die zweite Leiterschleife weiterhin zumindest eine reduzierte Wechselwirkung mit dem leiterschleifenbasierten Schlitzerkennungssystem hervorrufen kann. Es können auch mehr als zwei Leiterschleifen auf diese Weise miteinander eingesetzt werden, um die zuvor genannten vorteilhaften Effekte zu erreichen bzw. zu steigern.

Gemäß einem weiteren Aspekt der vorliegenden Erfindung sind die erste Leiterschleife und die zweite Leiterschleife in einer Verbindungsmatrix, vorzugsweise in einer textilen Verbindungsmatrix, eingebettet. Unter einer Verbindungsmatrix kann jedes Element verstanden werden, welche die verbesserte Positionierung der Leiterschleifen während der Herstellung, insbesondere während der Vulkanisation, bewirken kann. Mit anderen Worten dient die Verbindungsmatrix dazu, ein Verschieben wenigstens einer der Leiterschleifen, vorzugsweise beider Leiterschleifen, in die Längsrichtung bzw. aus der Y-Z-Ebene heraus zu vernleiden. Dies gilt für den Betrieb des Fördergurtes und insbesondere für dessen Herstellung.

Hierzu kann vorzugsweise ein dreidimensionales textiles Gebilde, wie z.B. ein textiles Gewebe, verwendet werden, in welches die beiden Leiterschleifen vor der Herstellung eingefügt werden. Dann kann das textile Gebilde samt Leiterschleifen z.B. von einem elastomeren Material durchdrungen und vulkanisiert werden, so dass die Positionierung der Leiterschleifen durch das textile Gebilde möglichst im Zustand vor der Durchdringung mit dem elastomeren Material gehalten werden können. Auf diese Weise kann die Einhaltung der gewünschten Ausrichtung bzw. Positionierung der Leiterschleifen verbessert bzw. erreicht werden.

Gemäß einem weiteren Aspekt der vorliegenden Erfindung sind die erste Leiterschleife und die zweite Leiterschleife durch wenigstens ein Verbindungselement in der Längsrichtung miteinander verbunden. Auf diese Weise kann die gewünschte Positionierung bzw. der gewünschte Abstand zwischen den beiden Leiterschleifen in der Herstellung, insbesondere bei der Vulkanisation, sowie im Betrieb des Fördergurtes sichergestellt werden. Vorzugsweise kann das Verbindungselement hierzu starr ausgebildet sein, um den Abstand und die Position möglichst definiert vorgegeben zu können. Hierdurch kann auch eine verbesserte Positionierung der Enden einer Leiterschleife erreicht werden, falls die eigene Verbindungsstelle einer Leiterschleife versagt.

Gemäß einem weiteren Aspekt der vorliegenden Erfindung ist eine Mehrzahl von Verbindungselementen vorgesehen, welche sich im Wesentlichen in der Längsrichtung erstrecken. Auf diese Weise kann die Einhaltung des Abstands und der Positionierung der beiden Leiterschleifen zueinander verbessert werden.

Vorzugsweise sind alle Ecken der beiden Leiterschleifen in Längsrichtung miteinander verbunden. Hierdurch kann ein guter Kompromiss zwischen der Anzahl und dem Aufwand der Verbindungselemente und deren stabilisierender Wirkung erreicht werden.

Gemäß einem weiteren Aspekt der vorliegenden Erfindung ist wenigstens ein Verbindungselement, vorzugsweise sind wenigstens zwei Verbindungselemente, elektrisch leitfähig ausgebildet. Auf diese Weise kann eine elektromagnetische Kopplung der Leiterschleifen über das Verbindungselement bzw. die Verbindungselemente erreicht werden, da hierdurch die Ausbildung von zusätzlichen Leiterschleifen in Längsrichtung bewirkt werden kann. Auch kann hierdurch eine Redundanz der Leiterschleifen erreicht werden, falls sich Verbindungsstellen der beiden eigentlichen Leiterschleifen lösen. Mit anderen Worten können durch die elektrisch leitfähigen Verbindungselemente zusätzliche Leiterschleifen quer zu den beiden parallelen Hauptleiterschleifen ausgebildet werden.

Vorzugsweise ist das Verbindungselement bzw. sind die Verbindungselemente flexibel ausgebildet, damit das Verbindungselement bzw. die Verbindungselemente durch Aufschlagsbelastung und bzw. oder die Dehnungsbeanspruchung nicht beschädigt bzw. zerstört wird bzw. werden. Dies kann die Langlebigkeit des Verbindungselements bzw. der Verbindungselemente erhöhen.

Gemäß einem weiteren Aspekt der vorliegenden Erfindung weist der Fördergurtkörper ein elastomeres Material auf, vorzugsweise besteht der Fördergurtkörper im Wesentlichen aus einem elastomeren Material, in welches die erste Leiterschleife und bzw. oder die zweite Leiterschleife durch Vulkanisation eingebettet ist bzw. sind. Hierdurch kann eine einfache Herstellung des Fördergurtkörpers sowie eine einfache und zuverlässige Einbindung der Leiterschleife bzw. Leiterschleifen in den Fördergurtkörper erfolgen. Auch kann hierdurch eine sicherer Positionierung der Leiterschleife bzw. Leiterschleifen erreicht werden. Ferner kann die Leiterschleife bzw. können die Leiterschleifen auf diese Weise vor äußeren Einflüssen wie z.B. Feuchtigkeit zur Vermeidung von Korrosion geschützt werden.

Gemäß einem weiteren Aspekt der vorliegenden Erfindung ist bzw. sind die erste Leiterschleife und bzw. oder die zweite Leiterschleife im Fördergurtkörper zumindest abschnittsweise relativ zum Fördergurtkörper beweglich angeordnet. Hierdurch kann zumindest teilweise vermieden werden, dass sich die Leiterschleife bzw. die Leiterschleifen mit dem Fördergurtmaterial derart mitbewegen, dass sie Dehnungsbeanspruchungen ausgesetzt ist bzw. sind. Hierdurch können die entsprechenden Belastungen reduziert bzw. vermieden werden.

Gemäß einem weiteren Aspekt der vorliegenden Erfindung ist bzw. sind die erste Leiterschleife und bzw. oder die zweite Leiterschleife zumindest abschnittsweise von einem Trennmittel umgeben, welches eine stoffschlüssige und bzw. oder kraftschlüssige Verbindung der Leiterschleife(n) mit dem umgebenden Fördergurtkörper zumindest abschnittsweise reduzieren oder verhindern kann. Dies kann z.B. dadurch erreicht werden, dass eine Trennschicht z.B. in Form eines Trennmittels zwischen der Leiterschleife bzw. den Leiterschleifen und dem umgebenden Material des Fördergurtkörpers angeordnet ist. Alternativ oder zusätzlich kann die Leiterschleife bzw. können die Leiterschleifen auch innerhalb eines hohlen Körpers wie z.B. eines Rohres angeordnet sein, wobei der hohle Körper selbst in das Material des Fördergurtkörpers eingebettet sein kann.

Gemäß einem weiteren Aspekt der vorliegenden Erfindung weist bzw. weisen die erste Leiterschleife und bzw. oder die zweite Leiterschleife ein metallisches Material auf, vorzugsweise besteht bzw. bestehen aus einem metallischen Material. Hierdurch kann die erforderliche elektromagnetische Leitfähigkeit der Leiterschleife bzw. der Leiterschleifen erreicht werden, um mit einem leiterschleifenbasierten Schlitzerkennungssystem zusammenwirken zu können.

Die vorliegende Erfindung betrifft auch ein leiterschleifenbasiertes Schlitzerkennungssystem zur Verwendung in einer Fördergurtanlage mit wenigstens einer Sender-/Empfängereinheit, welche ausgebildet ist, ein Signal in Richtung eines Fördergurtes der Fördergurtanlage zu senden und bzw. oder ein Signal von dem Fördergurt der Fördergurtanlage zu empfangen, und mit einer Rechnereinheit, welche ausgebildet ist, ein auszusendendes Signal der Sender-/Empfangseinheit zu erzeugen und bzw. oder ein empfangenes Signal der Sender-/Empfängereinheit zu verarbeiten, wobei die Rechnereinheit ferner ausgebildet ist, aus einem Ausbleiben eines empfangenen Signals der Sender-/Empfängereinheit und bzw. oder aus dem empfangenen Signal der Sender-/Empfängereinheit eine Beschädigung des Fördergurtes der Fördergurtanlage zu erkennen, wobei der Fördergurt der Fördergurtanlage ein Fördergurt wie zuvor beschrieben ist. Auf diese Weise können die zuvor beschriebenen Eigenschaften und Vorteile des erfindungsgemäßen Fördergurtes bei einem leiterschleifenbasierten Schlitzerkennungssystem angewendet werden.

Die vorliegende Erfindung betrifft auch eine Fördergurtanlage mit einem Fördergurt wie zuvor beschrieben und mit einem leiterschleifenbasierten Schlitzerkennungssystem wie zuvor beschrieben. Auf diese Weise können die Eigenschaften und Vorteile des erfindungsgemäßen Fördergurtes bei einer Fördergurtanlage im Rahmen eines leiterschleifenbasierten Schlitzerkennungssystems angewendet werden.

Mehrere Ausführungsbeispiele und weitere Vorteile der Erfindung werden nachstehend im Zusammenhang mit den folgenden Figuren erläutert. Darin zeigt:
- Fig. 1: eine perspektivische schematische Darstellung eines erfindungsgemäßen Fördergurtes gemäß einem ersten Ausführungsbeispiel;
- Fig. 2: eine perspektivische schematische Darstellung eines erfindungsgemäßen Fördergurtes gemäß einem zweiten Ausführungsbeispiel; und
- Fig. 3: eine perspektivische schematische Darstellung eines erfindungsgemäßen Fördergurtes gemäß einem dritten Ausführungsbeispiel.

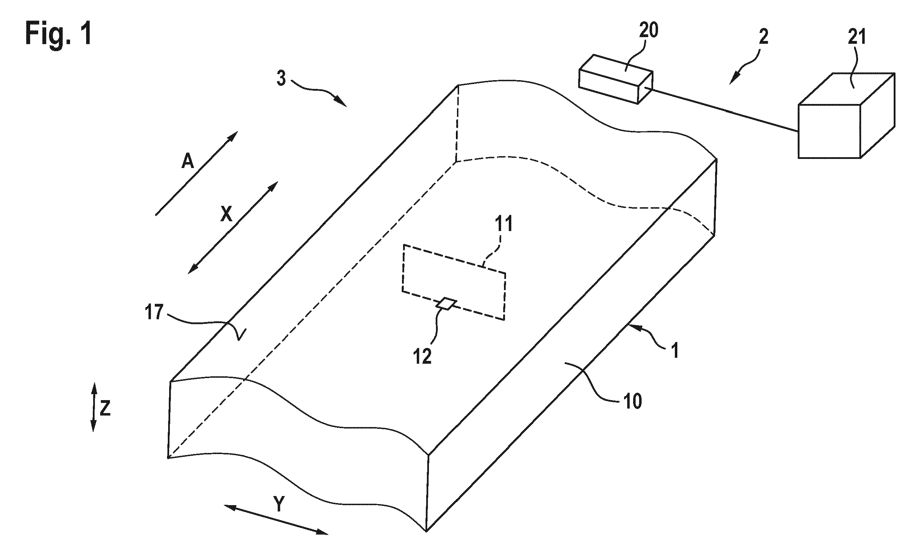

Fig. 1 zeigt eine perspektivische schematische Darstellung eines erfindungsgemäßen Fördergurtes 1 gemäß einem ersten Ausführungsbeispiel.

Der Fördergurt 1 wird im Wesentlichen durch einen Fördergurtkörper 10 aus im Wesentlichen elastomerem Material gebildet, welcher endlos geschlossen ist. Der Fördergurt 1 bzw. Fördergurtkörper 10 erstreckt sich im Wesentlichen in einer Längsrichtung X, welche auch als X-Richtung X oder Länge X bezeichnet werden kann. Der Fördergurt 1 bzw. der Fördergurtkörper 10 erstreckt sich ferner in einer Querrichtung Y senkrecht zur Längsrichtung X, welche auch als Y-Richtung Y oder Breite Y bezeichnet werden kann. Die Erstreckung des Fördergurtkörpers 10 in Querrichtung Y ist geringer als dessen Erstreckung in Längsrichtung X.

Des Weiteren erstreckt sich der Fördergurt 1 bzw. der Fördergurtkörper 10 in einer senkrechten Richtung Z senkrecht zur Längsrichtung X und senkrecht zur Querrichtung Y, welche auch als Z-Richtung Z oder Höhe Z bezeichnet werden kann. Die Erstreckung des Fördergurtkörpers 10 in der senkrechten Richtung Z ist geringer als in Querrichtung Y. Die Bewegung des Fördergurtes 1 erfolgt in einer Bewegungsrichtung A, welche auch als Laufrichtung A des Fördergurtes 1 bezeichnet werden kann. Die in der senkrechten Richtung Z obere Seite des Fördergurtes 1 ist die Tragseite 17 des Fördergurtes 1, auf welcher das zu transportierende Fördergut (nicht dargestellt) aufgenommen werden kann.

Innerhalb des Fördergurtkörpers 10 ist eine erste Leiterschleife 11 aus einem elektrisch leitfähigen Material eingebettet, welche über eine Verbindungsstelle 12 endlos geschlossen ist. Die erste Leiterschleife 11 kann mit einer Sender-/Empfängereinheit 20 eines leiterschleifenbasierten Schlitzerkennungssystems 2 in Wechselwirkung stehen. Das hierfür erforderliche Sendesignal kann von einer Rechnereinheit 21 erzeugt und zur Sender-/Empfängereinheit 20 übertragen werden. Das von der Sender-/Empfängereinheit 20 empfangene Signal kann von der Rechnereinheit 21 ausgewertet werden, weshalb die Rechnereinheit 21 auch als Auswerteeinheit 21 bezeichnet werden kann. Die Details derartiger leiterschleifenbasierten Schlitzerkennungssysteme 2 sind bekannt. Der Fördergurt 1 und das leiterschleifenbasierte Schlitzerkennungssystem 2 sind Bestandteil einer Fördergurtanlage 3.

Erfindungsgemäß ist die erste Leiterschleife 11 in der Querrichtung Y und in der senkrechten Richtung Z ausgerichtet im Fördergurtkörper 10 angeordnet. Auf diese Weise können Dehnungsbeanspruchungen der ersten Leiterschleife 11, welche im Fördergurt 1 üblicherweise im Wesentlichen in Bewegungsrichtung A und damit in Längsrichtung X auftreten, stark reduziert bzw. vollständig vermieden werden. Gleichzeitig kann die Angriffsfläche der ersten Leiterschleife 11 für Aufschlagsbelastungen stark reduziert bzw. vollständig vermieden werden. Dies kann die Langlebigkeit der ersten Leiterschleife 11 deutlich erhöhen. Dies gilt ebenso für die Verbindungsstelle 12 der ersten Leiterschleife 11. Die erste Leiterschleife 11 ist ferner rechteckig ausgebildet.

Um die Aufschlagbelastungen der Verbindungsstelle 12 der ersten Leiterschleife 11 weiter zu verringern, ist die Verbindungsstelle 12 auf der Seite der ersten Leiterschleife 11 angeordnet ist, welche der Tragseite 17 des Fördergurtes 1 abgewandt ist. Auf diese Weise kann die Verbindungsstelle 12 durch das Material des Fördergurtkörpers 10 vor dem Aufschlag des Fördergutes geschützt werden.

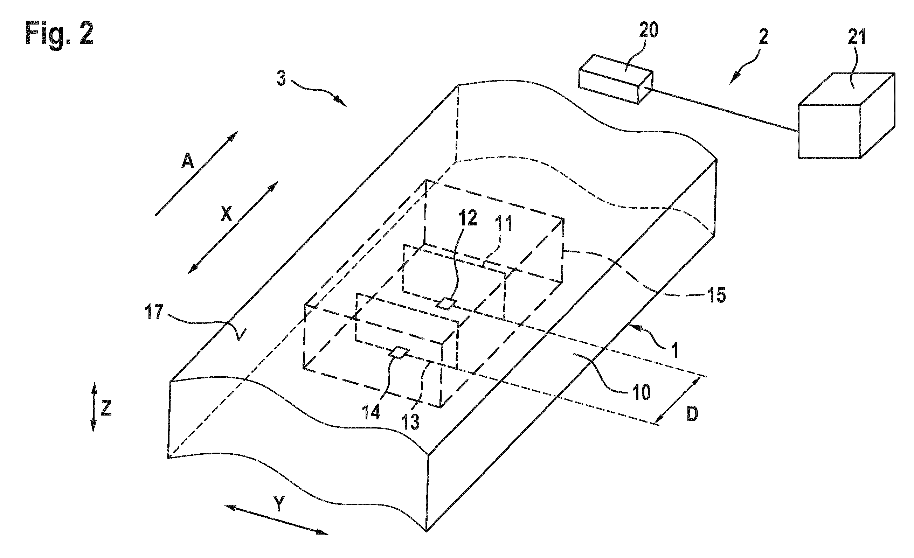

Fig. 2 zeigt eine perspektivische schematische Darstellung eines erfindungsgemäßen Fördergurtes 1 gemäß einem zweiten Ausführungsbeispiel. In diesem Ausführungsbeispiel ist zusätzlich eine zweite Leiterschleife 13 vorgesehen, deren offene Enden mittels einer Verbindungsstelle 14 endlos geschlossen sind. Die zweite Leiterschleife 13 ist identisch zur ersten Leiterschleife 11 ausgebildet und angeordnet. Auch die Verbindungsstelle 14 der zweiten Leiterschleife 13 ist auf der Seite der zweiten Leiterschleife 13 angeordnet ist, welche der Tragseite 17 des Fördergurtes 1 abgewandt ist.

Die beiden Leiterschleifen 11, 13 weisen in Längsrichtung X einen Abstand D zueinander auf, der so gering gewählt ist, dass die beiden Leiterschleifen 11, 13 mit der Sender-/Empfangseinheit 20 des leiterschleifenbasierten Schlitzerkennungssystems 2 der Fördergurtanlage 3 als eine Leiterschleife zusammenwirken können. Auf diese Weise kann die elektromagnetische Wirkung zwischen den beiden Leiterschleifen 11, 13 und der Sender-/Empfangseinheit 20 des leiterschleifenbasierten Schlitzerkennungssystems 2 verstärkt werden.

Um die beiden Leiterschleifen 11, 13 insbesondere bei der Herstellung mittels Vulkanisation besser in der gewünschten Positionierung und Orientierung halten zu können, sind die beiden Leiterschleifen 11, 13 in diesem zweiten Ausführungsbeispiel von einer textilen Verbindungsmatrix 15 in Form eines textilen Gewebes 15 umgeben.

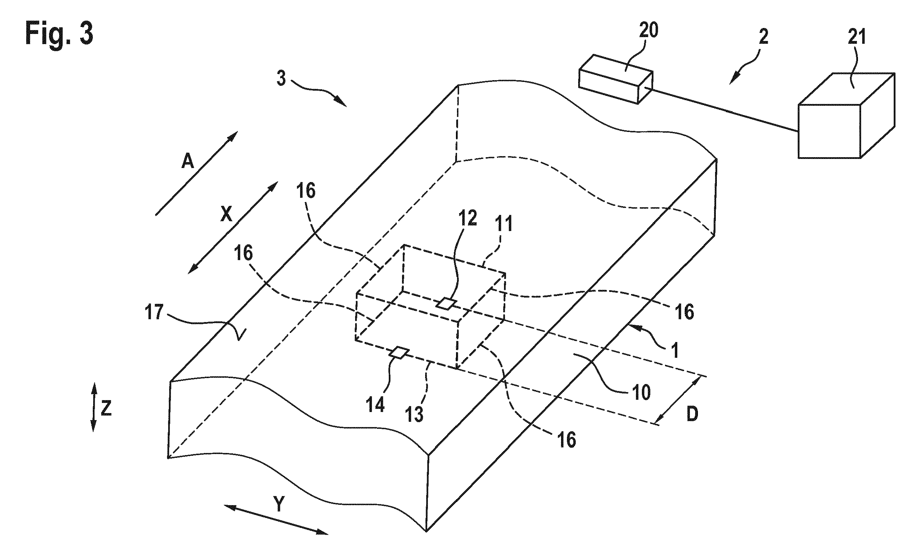

Fig. 3 zeigt eine perspektivische schematische Darstellung eines erfindungsgemäßen Fördergurtes 1 gemäß einem dritten Ausführungsbeispiel. In diesem Fall sind die beiden Leiterschleifen 11, 13 an ihren vier Ecken jeweils über ein Verbindungselement 16 in Längsrichtung X geradlinig miteinander verbunden. Auch hierdurch kann die Positionierung und Orientierung der beiden Leiterschleifen 11, 13 zueinander vorgeben und bei der Herstellung sowie im Betrieb gehalten werden.

Die vier Verbindungselemente 16 sind ebenfalls elektrisch leitfähig, so dass auch die Verbindungselemente 16 als Leiterschleifen wirken können. Ferner können hierdurch Redundanzen geschaffen werden, falls die Leiterschleifen 11, 13 beschädigt werden bzw. deren Verbindungsstellen 12, 14 versagen.

Durch diese Maßnahmen kann die Lebensdauer der Leiterschleifen 11, 13 verbessert werden. Insbesondere kann die Aufschlagsbelastung und bzw. oder die Dehnungsbeanspruchung der Leiterschleifen 11, 13 reduziert werden. Ferner kann das Einbringen der Leiterschleifen 11, 13 in den Fördergurtkörper 10 und bzw. oder der Austausch von Leiterschleifen 11, 13 vereinfacht werden.

### Bezugszeichenliste (Teil der Beschreibung)

- A: Bewegungsrichtung, Laufrichtung
- D: Abstand in Längsrichtung X zwischen erster und zweiter Leiterschleife 11, 13
- X: Längsrichtung, X-Richtung, Länge
- Y: Querrichtung, Y-Richtung, Breite
- Z: senkrechte Richtung, Z-Richtung, Höhe

- 1: Fördergurt
- 10: Fördergurtkörper
- 11: erste Leiterschleife
- 12: Verbindungsstelle der ersten Leiterschleife 11
- 13: zweite Leiterschleife
- 14: Verbindungsstelle der zweiten Leiterschleife 13
- 15: (textile) Verbindungsmatrix, textiles Gewebe
- 16: Verbindungselemente der ersten Leiterschleife 11 und der zweiten Leiterschleife 13
- 17: Tragseite des Fördergurtes 1

- 2: leiterschleifenbasiertes Schlitzerkennungssystem
- 20: Sender-/Empfängereinheit
- 21: Rechnereinheit, Auswerteeinheit

- 3: Fördergurtanlage

## Patentansprüche

1. Fördergurt (1) zur Verwendung in einer Fördergurtanlage (3) mit einem leiterschleifenbasierten Schlitzerkennungssystem (2), mit
einem Fördergurtkörper (10), welcher sich im Wesentlichen in einer Längsrichtung (X) erstreckt und in der Längsrichtung (X) endlos geschlossen ist oder ausgebildet ist, in der Längsrichtung (X) endlos geschlossen zu werden,
wobei sich der Fördergurtkörper (10) ferner in einer Querrichtung (Y) senkrecht zur Längsrichtung (X) erstreckt und die Erstreckung des Fördergurtkörpers (10) in Querrichtung (Y) geringer ist als in Längsrichtung (X), und
wobei sich der Fördergurtkörper (10) ferner in einer senkrechten Richtung (Z) senkrecht zur Längsrichtung (X) und senkrecht zur Querrichtung (Y) erstreckt und die Erstreckung des Fördergurtkörpers (10) in der senkrechten Richtung (Z) geringer ist als in Querrichtung (Y), und
wenigstens einer ersten Leiterschleife (11), welche zumindest abschnittsweise von dem Fördergurtkörper (10) umgeben wird,
**dadurch gekennzeichnet, dass**
sich die erste Leiterschleife (11) zumindest abschnittsweise in der senkrechten Richtung (Z) erstreckt.

2. Fördergurt (1) gemäß Anspruch 1,
wobei die erste Leiterschleife (11) im Wesentlichen rechteckig ausgebildet ist und sich in der Querrichtung (Y) und in der senkrechten Richtung (Z) erstreckt.

3. Fördergurt (1) gemäß Anspruch 1 und 2,
wobei die erste Leiterschleife (11) mittels einer Verbindungsstelle (12) ihrer beiden Enden endlos geschlossen ist,
wobei sich die Verbindungsstelle (12) der ersten Leiterschleife (11) im Wesentlichen in der Querrichtung (Y) und/oder in der senkrechten Richtung (Z) erstreckt.

4. Fördergurt (1) gemäß Anspruch 3,
wobei die Verbindungsstelle (12) auf der Seite der ersten Leiterschleife (11) angeordnet ist, welche der Tragseite (17) des Fördergurtes (1) abgewandt ist.

5. Fördergurt (1) gemäß einem der vorherigen Ansprüche,
wenigstens einer zweiten Leiterschleife (11), welche zumindest abschnittsweise von dem Fördergurtkörper (10) umgeben wird,
wobei die erste Leiterschleife (11) und die zweite Leiterschleife (12) in der Längsrichtung (X) um einen Abstand (D) zueinander beabstandet angeordnet sind,
wobei der Abstand (D) derart gering gewählt ist, dass die beiden Leiterschleifen (11, 13) mit einer Sender-/Empfangseinheit (20) eines leiterschleifenbasierten Schlitzerkennungssystems (2) der Fördergurtanlage (3) als eine Leiterschleife zusammenwirken können.

6. Fördergurt (1) gemäß Anspruch 5,
wobei die erste Leiterschleife (11) und die zweite Leiterschleife (12) in einer Verbindungsmatrix (15), vorzugsweise in einer textilen Verbindungsmatrix (15), eingebettet sind.

7. Fördergurt (1) gemäß Anspruch 5 oder 6,
wobei die erste Leiterschleife (11) und die zweite Leiterschleife (12) durch wenigstens ein Verbindungselement (16) in der Längsrichtung (X) miteinander verbunden sind.

8. Fördergurt (1) gemäß Anspruch 7,
wobei eine Mehrzahl von Verbindungselementen (16) vorgesehen ist, welche sich im Wesentlichen in der Längsrichtung (X) erstrecken.

9. Fördergurt (1) gemäß Anspruch 7 oder 8,
wobei wenigstens ein Verbindungselement (16), vorzugsweise wenigstens zwei Verbindungselemente (16), elektrisch leitfähig ausgebildet ist bzw. sind.

10. Fördergurt (1) gemäß einem der vorherigen Ansprüche,
wobei der Fördergurtkörper (10) ein elastomeres Material aufweist, vorzugsweise im Wesentlichen aus einem elastomeren Material besteht, in welches die erste Leiterschleife (11) und/oder die zweite Leiterschleife (12) durch Vulkanisation eingebettet ist bzw. sind.

11. Fördergurt (1) gemäß einem der Ansprüche 1 bis 9,
wobei die erste Leiterschleife (11) und/oder die zweite Leiterschleife (12) im Fördergurtkörper (10) zumindest abschnittsweise relativ zum Fördergurtkörper (10) beweglich angeordnet ist bzw. sind.

12. Fördergurt (1) gemäß Anspruch 11,
wobei die erste Leiterschleife (11) und/oder die zweite Leiterschleife (12) zumindest abschnittsweise von einem Trennmittel umgeben ist bzw. sind, welches eine stoffschlüssige und/oder kraftschlüssige Verbindung der Leiterschleife(n) (11, 12) mit dem umgebenden Fördergurtkörper (10) zumindest abschnittsweise reduzieren oder verhindern kann.

13. Fördergurt (1) gemäß einem der vorherigen Ansprüche,
wobei die erste Leiterschleife (11) und/oder die zweite Leiterschleife (12) ein metallisches Material aufweist bzw. aufweisen, vorzugsweise aus einem metallischen Material besteht bzw. bestehen.

14. Leiterschleifenbasiertes Schlitzerkennungssystem (2) zur Verwendung in einer Fördergurtanlage (3), mit
wenigstens einer Sender-/Empfängereinheit (20), welche ausgebildet ist, ein Signal in Richtung eines Fördergurtes (1) der Fördergurtanlage (3) zu senden und/oder ein Signal von dem Fördergurt (1) der Fördergurtanlage (3) zu empfangen, und
einer Rechnereinheit (21), welche ausgebildet ist, ein auszusendendes Signal der Sender-/Empfangseinheit (20) zu erzeugen und/oder ein empfangenes Signal der Sender-/Empfängereinheit (20) zu verarbeiten,
wobei die Rechnereinheit (21) ferner ausgebildet ist, aus einem Ausbleiben eines empfangenen Signals der Sender-/Empfängereinheit (20) und/oder aus dem empfangenen Signal der Sender-/Empfängereinheit (20) eine Beschädigung des Fördergurtes (1) der Fördergurtanlage (3) zu erkennen,
wobei der Fördergurt (1) der Fördergurtanlage (3) ein Fördergurt (1) gemäß einem der Ansprüche 1 bis 13 ist.

15. Fördergurtanlage (3), mit
einem Fördergurt (1) gemäß einem der Ansprüche 1 bis 13 und
einem leiterschleifenbasierten Schlitzerkennungssystem (2) gemäß Anspruch 14.
